# EUROPEAN PATENT SPECIFICATION

(11) **EP 1 173 327 B1**
(45) Date of publication and mention of the grant of the patent: **25.06.2003**
(21) Application number: 00918888.9
(22) Date of filing: 14.04.2000
(51) Int. Cl.: B32B 3/10, A41D 27/24, A43B 7/12

(54) **CLOTHING PART**
BEKLEIDUNGSSTÜCK
PIECE VESTIMENTAIRE

(30) Priority: 16.04.1999 DE 19917369
(43) Date of publication of application: 23.01.2002
(73) Proprietor: W.L. GORE & ASSOCIATES GmbH, 85640 Putzbrunn (DE)
(72) Inventor: RAUCH, Max, D-82031 Grünwald (DE); PFISTER, Martin, D-85635 Höhenkirchen (DE)
(74) Representative: Hirsch, Peter, Dipl.-Ing.
(86) International application number: EP0003431
(87) International publication number: WO00063007

(56) References cited:
- EP-A- 0 927 524
- EP-A- 0 976 337
- US-A- 4 303 712
- US-A- 4 599 810
- US-A- 5 664 343

## Description

### FIELD OF THE INVENTION

This invention relates to clothing parts, including footwear and parts for footwear, having an outer protective layer and a waterproof, breathable inner layer adhered to the outer layer.

### BACKGROUND OF THE INVENTION

The outer layer of clothing , especially the outer layer of a shoe upper, ordinarily is permeable to liquid water, being frequently made of leather or canvas. These parts are waterproofed by providing a waterproof lining inside the outer layer. Frequently, for added comfort, the lining is also permeable to water vapor, i.e. breathable. This waterproof lining is sometimes referred to as a functional layer or material. It can be a two-layer laminate comprised of a functional layer material and a cloth lining; or it can be a three-layer material which is made of the functional layer material, the cloth lining and a textile backing. In some applications, the laminate may comprise even more layers when the use of materials like felts, foams or the like for insulation or stiffening reasons, is desired.

The waterproof lining is formed from pattern pieces cut out of sheets and then joined together at seams, usually by sewing, to form the clothing. The lining is then loosely disposed on the inner side of the outer water- permeable layer of the clothing, to retain some water vapor permeability. But due to the fact that there still remain some air gaps inbetween the lining and the outer material water vapor permeability and heat transmission is significantly reduced.

When a functional layer or a functional layer laminate is sewn, the functional layer becomes water-permeable at the locations of the stitching holes. This is why such stitching seams, after sewing together, usually are sealed by adhering a waterproof seam sealing tape in waterproof manner. Suitable seam sealing tape is a material cut from a multi-layer laminate comprising a functional layer and a thin outer material and having a waterproof adhesive applied thereto.

WO 98/29000 discloses footwear with a shaft of outer material and loosely arranged thereon an inner functional layer. Movement of the layers can take place which can damage the functional layer. WO 98/29000 attempts to alleviate this by providing a non-abrasive layer on the inside of the outer material. But due to the nature of the non-abrasive layer, the seam sealing tape is placed on the inside of the functional layer, causing esthetic and wear problems.
When the outer material, the functional layer and any lining layer have already been adhered together before the pattern pieces thereof are cut out, the functional layer always has to have as many perforating seams as are required for the outer material, even though some seams are not required for joining pieces together but serve to only secure appliques or as purely decorative seams. These seams lead to a perforation of the functional layer and thus, they need to be sealed to be waterproof, then seam sealing tape has to be adhered atop the lining side of the laminate to seal the stitching seams with which the individual laminate pieces are joined together. The consequence is, especially in the case of pieces assembled from a relatively large number of parts, a correspondingly large number of seam sealing tapes on the lining side. This is not just unwelcome from aesthetic aspects, but frictional contact with the body or with further clothing pieces worn on the inside of the clothing piece can over time lead to seam sealing tape becoming detached as a consequence of chafing and/or rubbing.

Hitherto, to manufacture a shoe with many outer protective material seams, without having to seal all these many seams with a seam sealing tape, use was made of an outer material and a functional layer laminate which were stitched together only in a few areas and were loosely adjacent elsewhere. When the functional layer consisted of several sewn-together functional layer pieces, the finished functional layer could be sealed with seam sealing tape on the side remote from the lining and disposed, later on, opposite the outer material inside, before the functional layer was sealed to the outer material at the circumference or part of the circumference. The seam sealing tapes used for sealing the seams holding together the functional layer pieces then could not be seen on the finished part. A disadvantage in this respect is that the loose functional layer laminate, in particular with shoes having regions with large curvatures, does not abut the outer material, but may hang away therefrom. This may result in an aesthetically impaired impression. Furthermore, air barriers are created between the outer material and the functional layer, which can impair the breathability of the clothing part. Rubbing or friction between the inner side of the outer material and the seam tape which is located on the outer side of the functional layer is a disadvantage. It can over time lead to seam sealing tape becoming detached as a consequence of chafing and/or rubbing and this results in a loss of water proofness.

### SUMMARY OF THE INVENTION

It is an object of this invention to overcome the deficiencies recited above, and in particular to reduce the number of seams which need to be sealed to make them waterproof, and eliminates relative motion between layers. The invention simplifies seam sealing and waterproofing. It is also an object to provide greater freedom of styling. The invention also eliminates the air gaps that are normally present and increases the water vapor permeability. Additionally it gives one an easy way to form sealed composites of the outer and the functional layer. These composites will facilitate the use of thinner and more breathable leathers or materials than would normally be used. The reason therefore is that the desired stiffness is achieved by creating that composite. It is no longer necessary to use additional reinforcement materials to create that desired stiffness.
The objectives are achieved by providing a clothing part that is a laminate of an outer protective material and an inner functional layer, in which the functional layer is comprised of a plurality of functional layer pieces joined together by stiched seams that are waterproofed by providing seam tape over the seam on the surface of the functional layer that is adjacent the outer protective material, said outer protective material and said plurality of functional layer pieces being joined together by an adhesive layer. This provides a unitary construction.

In an inventive process for manufacturing a part according to the invention, the first step is to provide an outer protective material of the desired form, optionally by joining a plurality of individual outer protective material pieces together to form the outer protective material part. The outer protective material can have applied to it decorative seams. In addition, a plurality of functional layer pieces are joined together by stiching seams which are waterproofed by applying seam tape. Thereafter, the outer material and the functional layer part are joined together, with the seam tape side adjactent to the outer material, by means of a discontinuous adhesive or a breathable continous adhesive to form a laminate of unitary construction.

The clothing piece can be part or form part of or can be a jacket, trousers, coat, overall, hat, glove, footwear or the like.

### BRIEF DESCRIPTION OF THE DRAWINGS

Embodiments of the invention will now be more particularly described with reference to the drawings.
Fig. 1 shows a functional layer laminate comprising a functional layer membrane and a lining layer;
Fig. 2 shows a cross section through a functional layer laminate of the kind shown in Fig. 1;
Fig. 3 shows a cross section through a laminate in which the functional layer is provided with a textile reinforcing layer;
Fig. 4 shows a cross section through a two-ply functional layer;
Fig 5 shows an example of a function layer part formed by functional layer pieces being stitched together;
Fig.6 shows the functional layer part of Fig. 5 with seam sealing tape;
Fig 7 shows an outer material part stitched together from two outer material pieces;
Fig 8 shows a functional layer part according to Fig. 6 with a one-piece outer material part prior to its adhesive lamination;
Fig. 9 shows a functional layer part according to Fig. 6 and an outer material part assembled from two outer material pieces, prior to its adhesive lamination;
Fig 10 shows a perspective view of a shoe manufactured according to the invention.
Fig. 11 shows a clothing piece for a motorcycle garment.

### DETAILED DESCRIPTION OF THE INVENTION

As seen in this invention, the outermost protective material and the functional layer are directly joined (or adhered) after the functional layer on the one hand and optionally the outer protective layer on the other hand have each been seamed, e.g. by stitching together separately from a plurality of functional layer pieces or from outer material pieces, respectively. The seams formed from the plurality of functional layer pieces are then waterproofed by applying waterproof seam tape. The outer material can be provided with applique seams and/or decorative seams. Thus, the functional layer is not perforated in the seam areas of the outer material. The two are then adhered together to form the laminate with the side of the functional layer containing the seam tape adjacent the outer layer. Therefore, it is seen that the invention requires significantly less sealing material for sealing seams than the use of conventional three-ply laminate. And since the region of sealing material, for example seam sealing tape, is customarily not water vapor permeable, the laminate retains better water vapor permeability when based on three-ply laminate according to the invention, owing to the reduced number of functional layer seams to be sealed, than when based on conventional three-ply laminate. Furthermore cost for seam tape and consequently cost of the clothing part, decrease. These positive effects of the invention increase in significance with the number of outer material seams, for example decorative seams, required.

To join a plurality of functional layer pieces together to form a functional layer part, the pieces are joined at seams by stiching. In this case, there is a need for a subsequent sealing of these seams by means of a sealing material, a popular choice for this being waterproof seam sealing tapes which are adhered atop the seam. In a clothing part laminate according to the invention, the application of such a sealing material is carried out before the laminating of outer material part and functional layer part to form the clothing part laminate. The seam sealing tape is applied to that side of the functional layer part which, after the laminating to form the clothing part laminate, is on the outer material facing side of the functional layer part. In the finished clothing part laminate, therefore the sealing tape is not visible, nor exposed to the aforementioned chafing and/or rubbing stresses.

The starting point for the invention is the cutting out of outer material patterns out of outer material on the one hand and the cutting out of functional layer on the other hand. In the invention, this is followed by a plurality of functional layer pieces being joined together to form a functional layer part, a plurality of outer material pieces being optionally joined together to form an outer material part, and only then the resulting outer material part and the resulting functional layer part being laminated to form a common laminate, by the outer material part and the functional layer part being adhered together by means of an inherently water vapor permeable adhesive layer or a discontinuous adhesive layer to form a clothing part laminate.

Direct lamination of outer material part and functional layer part to form a clothing part according to the invention, excludes an air layer which can act as a water vapor barrier and also a heat transmission barrier between the outer material and the functional layer. In comparison with a part of conventional type, in which the functional layer is only loosely attached to the outer material, a clothing part laminate according to the invention thus has a much lower water vapor transmission resistance. A laminate according to the invention has a water vapor transmission resistance Ret of less than 35m² Pa/W or even, in the case of a preferred embodiment, of less than 15m² Pa/W, depending on the choice of material with regard to outer material and lining material.
As compared to a part composed of conventional materials, a construction according to the invention has also a lower heat transmission resistance Rct, which may be less than 200X10⁻³ m²K/W and in a preferred embodiment of less than 100X10⁻³ m²K/W.

A typical functional layer laminate has a heat transmission resistance Rct of less than 25X10⁻³ m²K/W and a water-vapor-transmission resistance Ret of less than 13m² PA/W. Particular embodiments of functional layer laminate have a Ret of less than 7m² Pa/W.

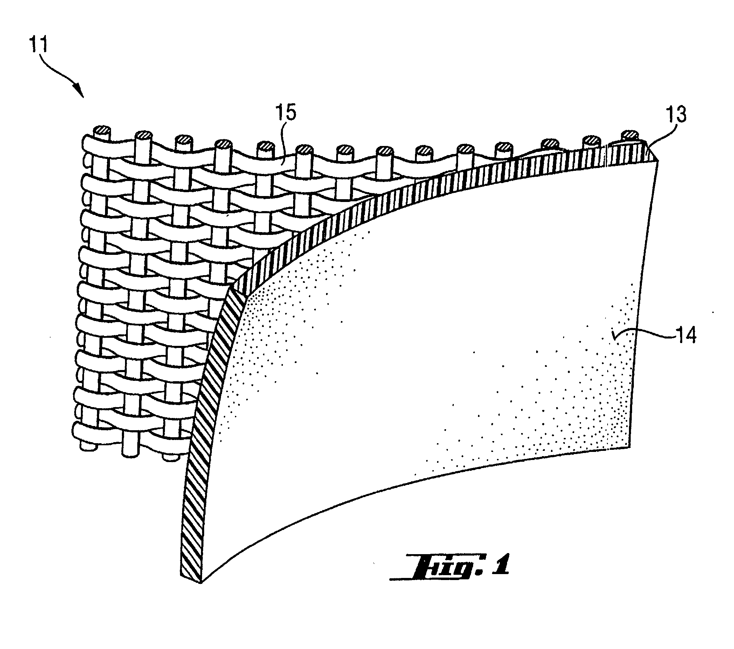

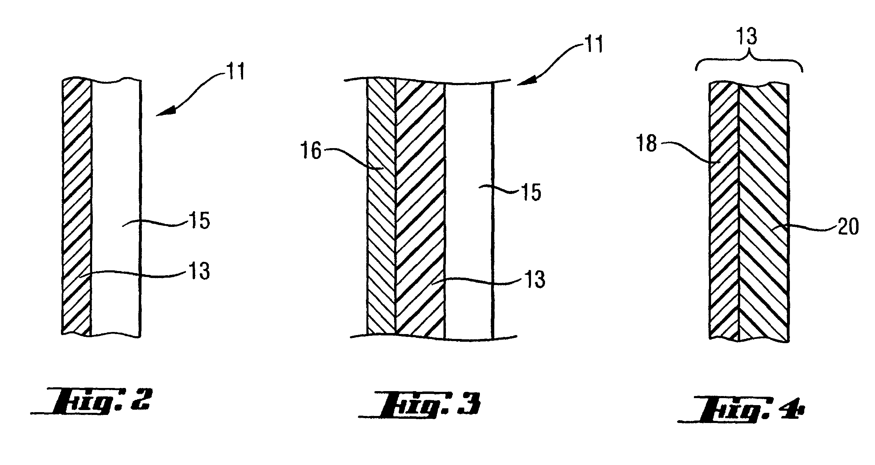

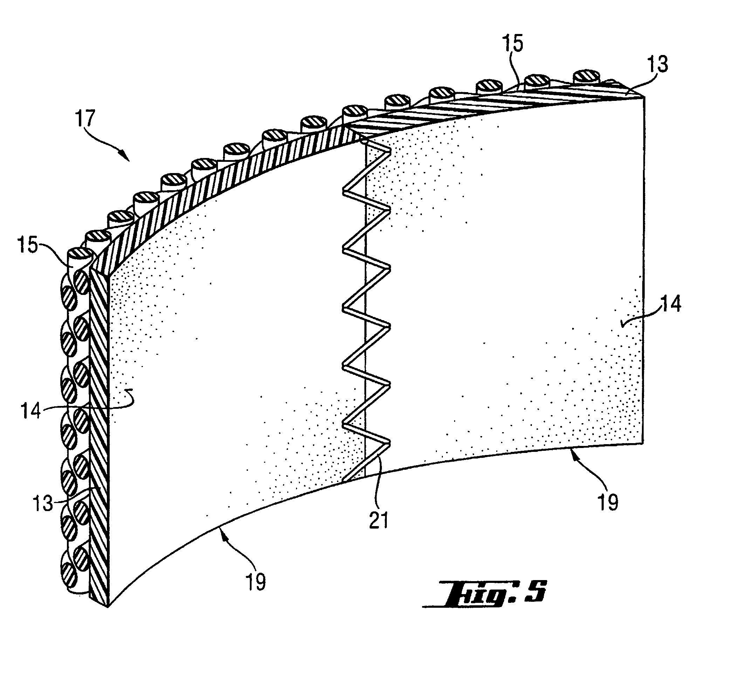

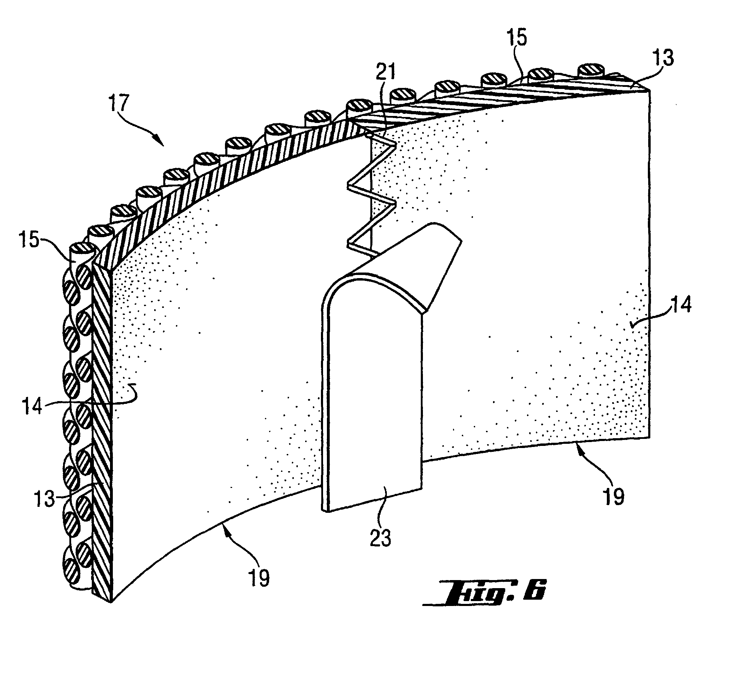

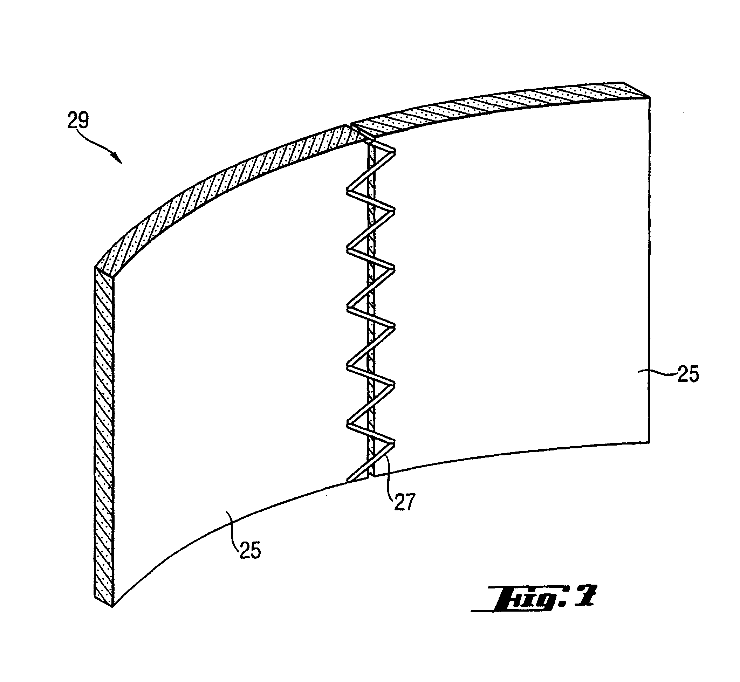

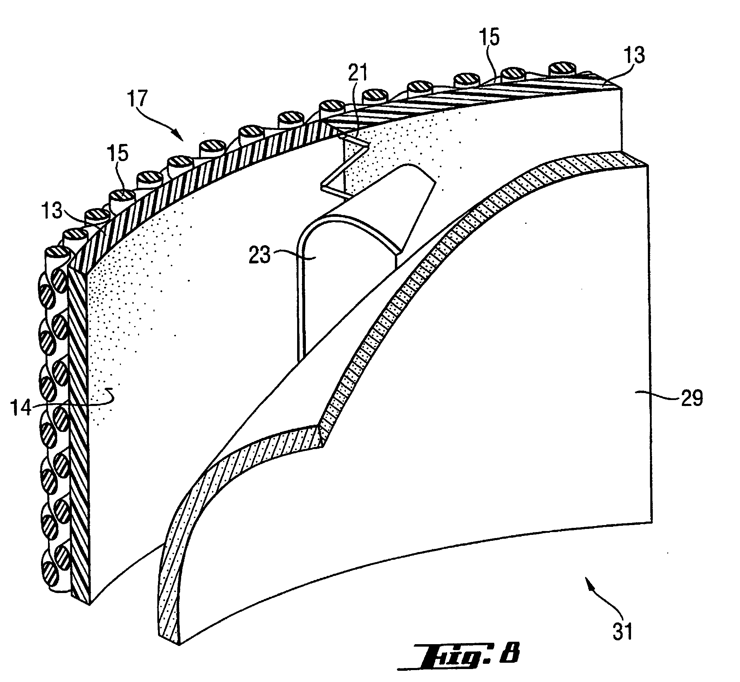

The functional layer is water-vapor-permeable and liquid waterproof. It is a membrane or film and will be described further below. It ordinarily includes a lining for protection. This form of the functional layer is described in Figs. 1 and 2. It is sometimes referred to as a two-ply laminate. When the functional layer also includes another lining or backer or covering on the opposite side, as shown in Fig. 3, it is sometimes referred to as a three-ply laminate.

In the case of the invention, where the outer material and the functional layer laminate are first laminated together to form a clothing part laminate comprising outer material and functional layer, for example a three-ply laminate, after the functional layer part on the one hand and optionally also the outer material part on the other have each been stitched together from a plurality of functional layer pieces and outer material pieces, respectively, and this after the outer material part has optionally been provided with applique seams and/or decorative seams, the functional layer need not be perforated in the areas of outer material seams. Therefore, the invention requires significantly less seam sealing tape, for sealing seams than the use of conventional three-ply laminate, reducing the manufacturing costs. And since the region of sealing material, for example seam sealing tape, is customarily free of water vapor permeability, the clothing part retains better water vapor permeability when based on three-ply laminate according to the invention, owing to the reduced number of functional layer seams to be sealed, than when based on conventional three-ply laminate. These positive effects of the invention increase in significance with the number of outer material seams, for example decorative seams, required.

Since, in the invention, the sealing of functional layer seams is effected by means of seam sealing tape, before the outer material part and the functional layer part are laminated the seam sealing tapes can be embedded between the outer material and the functional layer, where the respective seam sealing tape is not just protected against chafing and/or rubbing, but also remains invisible in the finished part.

The adhering to form the laminate can be effected either with adhesive which has been applied in continuous form, i.e., over the whole area, or with adhesive which has been applied discontinuously, i.e. with gaps. In this connection, the adhesive layer is preferably applied to the functional layer or functional layer laminate before the functional layer pieces are sewn together to form the functional layer part. Water-vapor-permeable adhesive is used in the case of a continuous adhesive layer being applied. For the use of a discontinuous adhesive layer, for example applied in powder, dot, net or matrix form, it is possible to use an adhesive which is not inherently water-vapor-permeable. Powdered adhesive is prefered due to it's low cost and the ease of adjusting adhesive laydowns. In this case, water vapor permeability is maintained by only a fraction of the surface of the functional layer being covered with adhesive.

The adhesive layer can be applied to the outer material and/or to the functional layer or the functional layer laminate, preferably before the cutting out of outer material pieces out of the outer material or the cutting out of functional layer pieces out of the functional layer material or the functional layer laminate.

The adhesive layer can be a layer of thermo-activatable adhesive. If this thermo-activatable adhesive is used for manufacturing a laminate from which footwear is manufactured the activation of the laminating adhesive can be effected by a heating device either applied from the inside or from the outside of the shoe.
An example of where the invention is particularly effective is sports shoes, for example light, waterproof and breathable summer shoes. For visual reasons, styling reasons and durability reasons, these are frequently assembled from a multiplicity of sewn-together outer material parts that may have a number of decorative seams. In such shoes manufactured using a conventional three-ply laminate made of outer protective material, functional layer and lining, the functional layer will be perforated in many areas owing to the many stitching seams required and correspondingly many seam sealing tapes will be required. This would not just entail a high material and labor requirement, but would lead to a shoe whose inner surface is disfigured with many seam sealing tapes, and these many seam sealing tapes would also be exposed to the consequences of the rubbing effect mentioned, especially in the case of sports shoes which are frequently worn without socks. In addition, the total breathability of a shoe decreases as the number of seam sealing tapes used, increases.
If use was made of an outer material and a functional layer laminate which are stitched together only in a few areas and were loosely adjacent elsewhere it would result in a shoe with a higher Ret and Rct due to the air barrier between the functional layer and the outer layer

With respect to footwear, the objectives of the invention are achieved by providing a shoe having an upper, an insole, and an outsole, the upper being comprised of a laminate comprised of an outermost protective layer material and a functional layer that is liquid waterproof and water vapor permeable, said functional layer comprised of a plurality of functional layer pieces joined together by stiched seams; said seams being waterproofed by a waterproof seam tape or adhesive applied to the surface of said functional layer that is adjacent the outermost protective layer.

The manufacture of a shoe can proceed for example as follows:
A functional layer laminate comprising a functional layer with a lining layer on one side thereof and a water-vapor-permeable adhesive layer on the other side thereof has cut out of it functional layer pieces which are stitched together to form a functional layer shoe shaft. In some cases it is desirable to use a three layer laminate comprising a functional layer with a lining layer on one side, and a thin re-enforcing nonwoven or knit on the other side thereof and a water-vapor-permeable adhesive layer on the other side thereof. The functional layer seams are sealed by means of seam sealing tape on that side of the functional layer laminate which is provided with the water-vapor-permeable adhesive layer. A plurality of outer material pieces are stitched together to form an identically shaped outer material shoe shaft. The outer material shaft can have decorations, seams, and quilting. The functional layer shaft and the outer material shaft are stitched together at their upper shaft ends and are then pulled over a form, the adhesive is activated and the outer material and the functional layer become partially adhered. This may happen in several manufacturing steps (heating and pressing the heel area, heating and pressing the toe area etc), or may happen in one step by applying heat and pressure on the entire surface of the shoe shaft. Afterwards the sole is attached using glue or injection moulding techniques or the like. The more or less finished shoe is then put through a hot press if the bonding of the functional layer and the outer protective layer has not been completed previously. Hot pressing activates the water-vapor-permeable adhesive material present on the outer material facing side of the functional layer, producing a laminating adhesive bond between the outer material shaft and the functional layer shaft.

The seam sealing tapes applied to the outer surface of the functional layer laminate prior to this laminating operation are no longer visible after the laminating of outer material shaft and functional layer shaft, since they have become embedded between the outer material shaft and functional layer shaft. As a result, the seam sealing tapes are not just invisible, but also are protected against chafing and rubbing effects.

In this method of manufacture, the outer material shaft can be provided with any number of decorations by means of outer material pieces and/or decorative seams, while the functional layer shaft can be stitched together from few functional layer pieces and therefore have fewer seams. If a shoe whose outer material has been provided with many decorations in the form of outer material pieces and/or decorative seams were to be manufactured from a conventional multiple laminate comprising outer material and functional layer, correspondingly many seam sealing tapes would have to be used, which would not only give the inner surface of the shoe an unaesthetic appearance, but owing to the many seam sealing tapes required, would also greatly impair the breathability of the finished shoe.

With regard to waterproofness and water-vapor-permeability and water-vapor transmission resistance, the upper laminate is subject to the same definitions and method of measurement as employed for functional layers.

The materials used in the invention are defined and exemplified as follows:
Outer protective material - The outer material is a protective material and can be, for example, leather or a textile. Textiles can be, for example, wovens, knits, nonwovens or felt. These textile materials can be formed from natural fiber, for example cotton, viscose or from synthetic fiber, for example polyester, polyamides, polypropylene or polyolefins or of blends of at least two of these materials. Such outer materials are normally water-permeable and water-vapor-permeable. To render them water resistant, they can be treated with a water-repellent material, i.e., a hydrophobic material , in such a way that the outer material remains water vapor permeable.
Inner functional layer: The functional layer is water-vapor-permeable and liquid waterproof. It ordinarily is made up of, or contains, a membrane or film that is water-vapor-permeable and liquid waterproof which can be selected from polyesters, polyamides, polyolefins, polyvinyl, chlorides, polyketones, polysulfones, polycarbonates, fluoropolymers including polytetrafluoroethylene, polyacrylates, polyurethanes, copolyetheresters and copolyesteramides. Preferably, the functional layer comprises a porous polyeterafluoroethylene, which is waterproof and water-vapor-permeable.
   Preferably it is expanded polytetrafluoroethylene having a multiplicity of open, interconnected voids formed by nodes and fibrils as described in U.S. Patent 3,953,566. As recited earlier, the inner functional layer can be a two-ply or a three-ply laminate.
Lining material: As lining material, which is joined to the functional layer to form a functional layer laminate, there may be used the same materials as specified above for the outer material, i.e. textiles, leather etc
Laminate adhesive: The lamination of the outer protective material part and the functional layer part to form the clothing part is effected by means of a direct adhesive bond between functional layer part and outer material. The laminating adhesive chosen possesses good adhesion to both the layers of material to be laminated together. During lamination, the laminate adhesive is situated between the layers to be laminated together. Prior to lamination, the laminate adhesive can be selectively applied to one side of one of the layers to be laminated together. The laminate adhesive can be applied as a discontinuous layer of adhesive, i.e., in dot form, line form, grid form, powder form or the like, especially if is not itself water vapor permeable. If it is water vapor permeable it may be applied continuously. The laminate adhesive can also be an adhesive web inserted between the layers to be laminated together. Suitable laminate adhesives are for example copolyamides, copolyesters, polyester polyurethane, polyamides and polyurethane adhesives, for example reactive polyurethane adhesive, and also mixtures of polyester urethane and polyurethane. Based on it's good bond strength and low melting point, the prefered adhesive is a thermoplastic copolyester with a melting point of 65°C.
Seam tape: Particularly suitable as a seam sealing tape is a waterproof adhesive tape available from W. L. Gore Associates GmbH under the trade name GORE-SEAM®, which is a two-ply laminate having a waterproof, water-vapor-permeable functional layer and a textile layer and is provided, on the functional layer side, with a continuous adhesive layer in the form of a polyurethane adhesive, having a melting point of about 130°C . As seam sealing tape, a two-ply laminate cut into band shape and having a construction according to Fig. 2 can be used, with a thin, mechanically strong textile layer being provided instead of lining layer. Such seam sealing tape is available in various widths, with a width of 22 mm being preferred.
Terms used herein are defined as follows:
   Waterproof: By waterproof is meant that the material under investigation is able to withstand a water ingress pressure of more than 0.13 bar. Preferably, the material can withstand a water pressure of more than 1 bar. The measurement is carried out by exposing a 100 cm² sample of the material under investigation to a rising water pressure. For this purpose, distilled water having a temperature of 20 ± 2°C is used. The rise in the water pressure is 60 ± 3 cm H₂O/min. The water ingress pressure of the sample is that pressure at which water passes through the opposite side of the sample. The exact method for carrying out this test is described in the 1981 ISO Standard No. 811.
   Water vapor permeable: The term water-vapor-permeable is defined via the water vapor transmission resistance Ret of the material so designated. The Ret is a specific material property of sheetlike structures or composites, which determines the "latent" evaporation heat flux through a given area in consequence of an existing steady-state partial pressure gradient. The Ret is defined in German Standard DIN EN 31 092 of February 1994, corresponding to International Standard ISO 11 092, and is expressed in m₂Pa/W (square meters Pascal per watt). For measuring Ret, a measuring head is employed having a temperature of 35°C at a relative humidity of air of 40%, with an air speed being adjusted to 1 m/s. The water vapor transmission resistance is measured using the Hohenstein skin model test, which is described in standard test method Ne. BPI 1.4 of September 1987 of Bekleidungsphysiologisches Institut e.V. Hohenstein.
   Heat transmission resistance: According to German Standard DIN EN 31 092 of February 1994, corresponding to International Standard ISO 11 092, the heat transmission resistance Rct, expressed in m²K/W (square meters Kelvin per watt), is defined as the dry heat flux through a given area as a consequence of a specific temperature gradient. For measuring Rct, a measuring head is employed having a temperature of 35°C, with the air temperature being set to 20°C, the relative air humidity being set to 65% and the air speed being set to 1 m/s. The heat transmission resistance is measured by the Hohenstein skin model test, which is described in standard test method Ne. BPI 1.4 of September 1987 of the Bekleidungsphysiologisches Institut e.V. Hohenstein.

The invention will now be described with reference to the figures.

Most of the figures are highly schematic views which by no means are to be understood to be true to scale. In all of the figures, the same reference numerals are used for corresponding components and elements.

Figures 1 and 2, in perspective view and in cross-sectional view respectively, show a functional layer laminate 11 which is produced by laminating a functional layer 13 and a lining layer 15. The joining of the functional layer 13 and the lining layer 15 is effected by means of a laminating adhesive (not shown). The laminating adhesive is applied discontinuously (for example in powder form, net form, dot form, matrix form). Dots 14 in Fig. 1 depict an adhesive on the outer surface of layer 13. Their function is explained below.

Figure 3 is a cross-sectional view of an embodiment of a functional layer laminate 11 in which the lining layer 15 is on one side of the functional layer 13, and an optional textile reinforcing layer 16 is located on the other side. This reinforcing layer 16 is a textile sheet material laminated onto one side of the functional layer 13. The textile sheet material can be a woven fabric, a consecutive coarse knitted fabric, a nonwoven fabric or a synchronous course formation knitted fabric. The material can be one of a multiplicity of material such as polyesters and polyamides (nylon). Preferably, the textile sheet material is a spunbonded material or knitted material with a charmeuse construction.

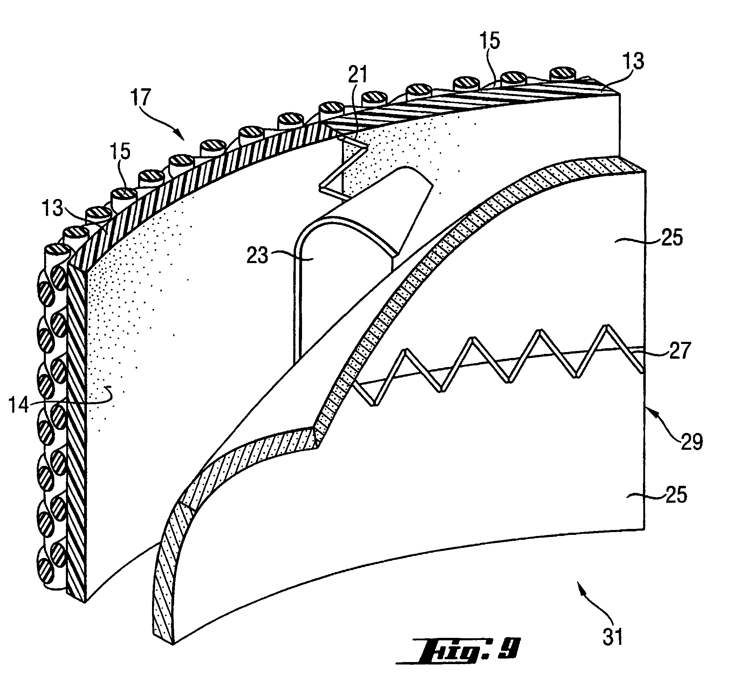

Referring to Figure 4, the functional layer 13 in this embodiment of the invention is a two-ply material comprising a water vapor permeable and liquid waterproof polymeric layer 18 and a continuous monolithic water-vapor permeable layer 20. The polymeric layer 18 is preferably a porous polymeric membrane having a microscopic structure of open interconnected microvoids. By micro is meant not visible to the naked eye. This layer is air-permeable and water vapor permeable. The membrane 18 preferably has a thickness of 5 µm to 125 µm; preferably a thickness of 5 µm to 25 µm. Thus the functional layer 13 is waterproof and is water vapor permeable.

The polymers used for the polymeric layer 18 can be not only plastic polymers but also elastic polymers. A preferred porous polymeric material is expanded polytatrafluoroethylene (ePTFE). This material has multiplicity of open, interconnected voids, a large void volume and immense strength. Expanded polytetrafluoroethylene is soft, flexible, has stable chemical properties, a high water vapor transmission rate and a surface possessing good contamination resistance. US-A-3 953 566 and US-A-4 187 390, which are expressly incorporated herein by reference, describe the production of such membranes in microporous expanded polytetrafluoroethylene.

The continuous water-vapor-permeable layer 20 is also liquid water resistant, but unlike layer 18, it is nonporous to prevent passage of undesirable contaminants.

Suitable continuous water-vapor-permeable polymers that perform the function of layer 20 are those of the family of polyurethanes, silicones, copolyetheresters or copolyetheresteramides, such as disclosed in US-A-4 493 870 (Vrouenraets) and US-A-4 725 481 (Ostapachenko) or polyurethanes as described in US-A-4 194 041 (Gore). Suitable compositions may be found in US-A-4 2 340 838 (Foy et al). A preferred class of continuous water-vapor-permeable polymers is polyurethanes.

Other known constructions of functional layers are possible. For example, in a further embodiment of the functional layer 13, a continuous nonporous hydrophillic water-vapor-permeable layer can be situated between two porous polymeric layers.

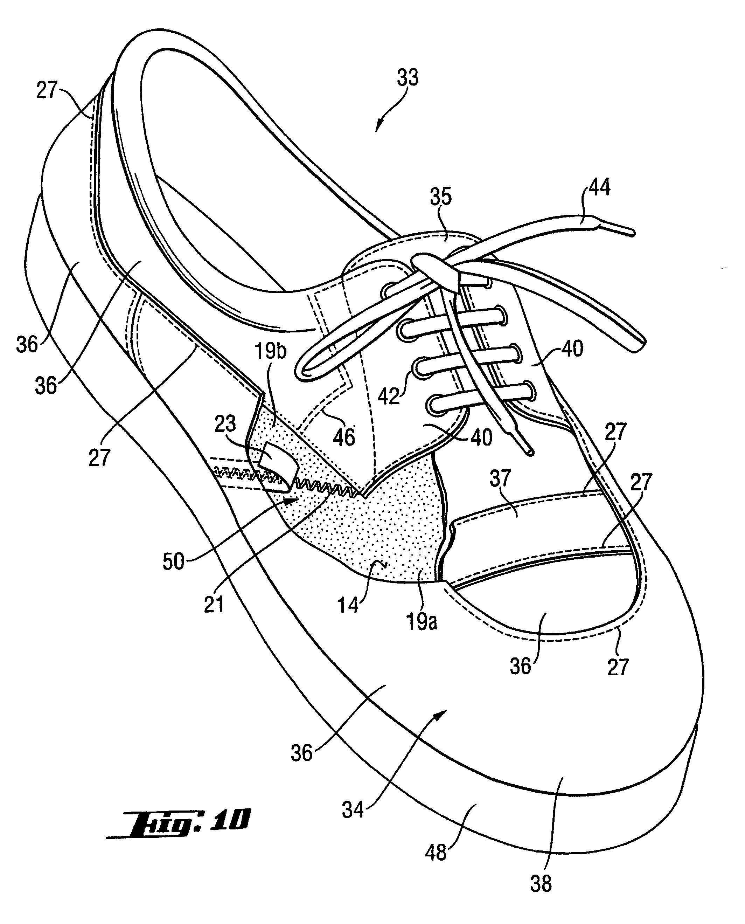

Fig. 5 illustrates a functional layer part 17 which has been assembled from two functional layer pieces 19 which have each been cut or punched out of functional layer laminate 11 and are joined together by means of a stitched seam 21. The seam 21 is preferably a zigzag seam which does not require mutual overlapping of the functional layer pieces 19 to be stitched together. A conventional sewing machine can be used for this purpose, for example from Singer.

Fig. 6 shows the functional layer part 17 of Fig. 5 in which the seam 21 is sealed with a waterproof seam sealing tape 23.

To adhere seam sealing tape atop seams to be sealed, a hot air welding machine can be used. On this machine, the adhesive present on the seam sealing tape for the adhering operation is melted by means of hot air provided by a hot air jet and the adhesion-capable seam sealing tape is pressed by a press roller with the adhesive side against the functional layer part seam region to be sealed and adhered thereto.

Instead of stitching seams, the joining together of a plurality of functional layer pieces 19 to form a functional layer part 17 can also be accomplished by using other types of seam, for example adhesive seams or weld seams. Such adhesive seams may also be provided with seam sealing tape.

Fig. 7 shows two outer material pieces 25 which have been joined together by means of an outer material seam 27 to form an outer material part 29. The outer material seam 29 can likewise be a zigzag seam and it too can be produced using a conventional sewing machine, for example from Singer. As well as joining seams such as the outer material seam, there may be provided further seams, for example decorative seams, which are not depicted in Fig. 7.

Fig. 8 illustrates functional layer part 17 having the construction shown in Fig. 6 being adhered to a one-piece outer material part 29 through adhesive dots 14 to form a laminate 31. As in Fig. 6, part of the seam sealing tape 23 is shown still folded down in order that the functional layer seam 21 may be visible. In reality, the seam sealing tape 23 covers the whole of the functional layer seam 21.

Fig. 9 illustrates a laminate 31 comprising a functional layer part as per Fig. 6 and an outer material part 29 as per Fig. 7, which has been assembled from two outer material pieces 25 joined together by means of the outer material seam 27.

As is clear from Figures 8 and 9, after the adhering of functional layer part 17 and outer material part 29, the seam sealing tape 23 is situated between these two parts, and is consequently invisible, and mechanically protected, in the finished laminate 31.

An illustrative embodiment will now be described for the manufacture of a shoe, for example a sport shoe of the kind shown in Fig. 10.

The shoe 33 shown in Fig. 10 comprises an outer material shaft 34 with a tongue 35 and a functional layer shaft 50, of which only part can be seen in Fig. 10, through a broken-away part of the outer material shaft 34. The outer material shaft 34 has been stitched together from a number of outer material pieces 36 by means of outer material seams 27. In the transition region between tongue 35 and foreshoe 38, the outer material 36 present therein has an outer material strap 37 stitched onto it by means of outer material seams 27. Outer material shaft parts 40, which are provided with eyelets 42 for receiving laces 44 and which partly overlap the tongue 35, are provided with decorative seams 46.

In the shoe 33 shown in Fig. 10, the functional layer shaft 50 consists of two functional layer pieces, namely of a forefoot functional layer piece 19a comprising a tongue part and of a rear foot functional layer piece 19b. Both are sewn together to form the functional layer shaft 50 by means of two functional layer seams 21, of which only one is visible in Fig. 10. The functional layer seams 21 have seam sealing tapes 23 adhered thereto in waterproof manner, of which also only one is visible in Fig. 10.

First an outer material shaft 34 of leather, for example nubuck leather, is produced in a thickness of 1.2 mm by stitching together a plurality of outer material pieces. A functional layer shaft 50 is stitched together from a plurality of functional layer laminate pieces, two functional layer laminate pieces 19a, 19b in the case of the shoe 33 shown in Fig. 10. These functional layer laminate pieces 19a, 19b have been cut or punched out of a functional layer laminate 50 on which there is already situated a discontinuous laminate adhesive layer 14 which, for example in the aforementioned manner, has been produced by means of adhesive, for example polyurethane adhesive, by sprinkling in powder form and then fixing by means of heat.

The laminate adhesive 14 used can be a pulverulent adhesive, for example low melting copolyester powder. This is sprinkled onto the functional layer or the functional layer laminate 50 and then heated, preferably infrared heated, to fix it on the functional layer or functional layer laminate 50 by incipient melting. When a two-ply functional layer of the type shown in Fig. 2 is used, the pulverulent adhesive is sprinkled onto the nonporous hydrophillic water-vapor-permeable layer 20 (Fig. 2). In a preferred embodiment, in which the polymeric layer 18 is composed of porous polytetraflouroethylene above and the nonporous water-vapor-permeable layer 20 of a polyurethane layer, the pulverulent laminate adhesive 14 is sprinkled onto the polyurethane layer and fixed thereon. In some cases it is desirable to use a three layer product which can add additional strength to the composite formed by the outer and the functional liner. In this case the third layer is preferably a thin non-woven material that adds strength without significantly increasing the thickness. The pulverulant adhesive 14 is now applied to the non-woven material. In cases where extreme durability may be desired, a knit material with good abrasion resistance that is still capable of being seam taped may be used.

The functional layer seams 21 are then sealed waterproof by means of seam sealing tape 23, which preferably has a width of 22 mm. GORE-SEAM® seam sealing tape is an acceptable tape. This is adhered atop the laminate adhesive 14 of the functional layer laminate 50 by means of a hot air welding machine, preferably in the course of heating to 130°C.

The functional layer shaft 50 is then suspended on the inside of the outer material shaft 34, which means that the functional layer shaft 50 is stitched to the outer material shaft 34 only at this upper edge but otherwise remains loose in relation to the outer material shaft 34.

The functional layer shaft 50 and the outer material shaft 34 are now bonded together at least partially. The outer material shaft 34 and the functional layer shaft 50 are placed over a heated form and pressure is applied to bond the top and sides of the inner functional layer shaft 50 to the outer material shaft 34. The heel and toe areas of the functional layer shaft 50 and outer material shaft 34 become further bonded together during the forming of the heal counter, in a heated former, and the forming of the toe puff. If necessary, a heat press can be used to bond the areas around the tongue of the shoe.

Thereafter, if the lamination of functional layer shaft 50 and outer material shaft 34 is not complete, then optionally the outer material shaft 34 and function layer shaft 50 of the shoe 33 are placed into a press. The shoe 33 is heated to about 80°C to 90°C in a heating oven so as to activate the laminate adhesive 14 on the functional layer laminate and adhere the outer material shaft 34 and the functional layer shaft 50 permanently together to form an upper shaft laminate.

According to an alternative process for laminating outer material shaft 34 and functional layer shaft 50, the shoe 33 is placed into a vacuum press. That is, the shoe 33 has slipped over it a rubber bag which can be evacuated to force outer material shaft 34 and functional layer shaft 50 together. The shoe 33 on a last and in the vacuum press is heated at about 80° C to 90° C in a heating oven so as to convert the laminate adhesive 14 on the functional layer laminate into an adhesion-capable state and to adhere the outer material shaft 34 and the functional layer shaft 50 permanently together to form a shaft laminate.

To stitch the sports shoe 33 together in a conventional manner from three-ply laminate pieces which each constitute a composite of outer material, functional layer and lining, all the seams 27 and 46 in Fig. 10 would perforate not only the outer material but also the functional layer and correspondingly many seam sealing tapes would have to be affixed on the inner surface of the sports shoe 33.

A sports shoe 33 constructed according to the present invention, however, requires only two functional layer seams 21 and thus also only two seams sealing tapes 23. The labor and material requirement for the seam sealing tapes 23 is very significantly reduced compared with the conventional method, correspondingly reducing the manufacturing costs. Since only two relatively short seam sealing tapes 23 are required, the total breathability of the shoe 33 is only very minimally impaired by seam sealing tape.

Since, according to the invention the seam sealing tape 23 is embedded between the outer material 34 and the functional layer 50 of the three-ply laminate forming the shaft, there are no seam sealing tapes whatsoever to be seen on the inside of the sports shoe 33 manufactured according to the invention, only the two functional layer seams 21.

The method of the invention thus leads to lower manufacturing costs, better durability of the seam sealing tapes due to no rubbing, better breathability due to less seam tape required and better aesthetic appearance than a shoe whose shaft has been constructed in a conventional manner using conventional three-ply laminate.

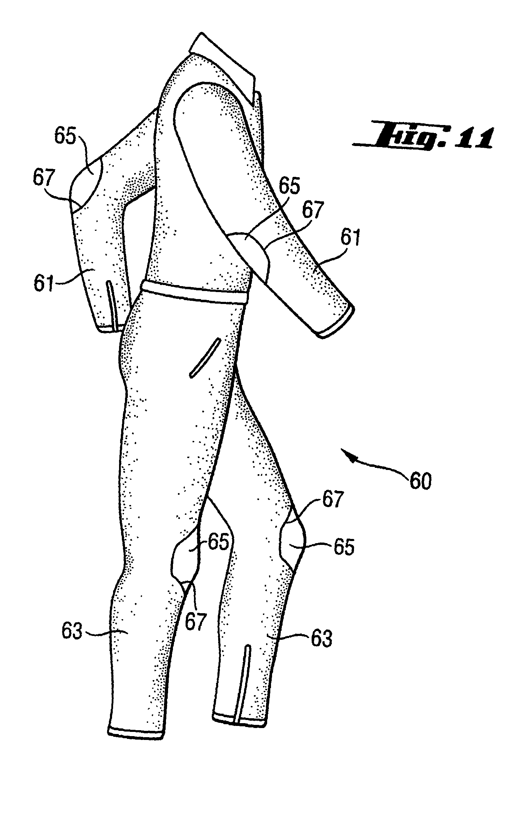

As an additional example of a clothing part made according to the invention, a protective suit 60 for a motorcyclist will be described by way of Fig. 11. This protective suit 60 is composed by laminating upper material parts and functional layer parts of the type shown in Fig. 9 and has sleeve parts 61 and leg parts 63, the elbow and knee regions, respectively, of which have reinforcing elements 65 sewn thereto by means of seams 67. The sewing on of these elements was carried out before the necessary outer material parts and functional layer parts were laminated to form the clothing part laminate. The functional layer of the finished clothing part laminate thus does not need to have a seam perforation in the region of seams 67 for sewing on the reinforcing elements 65. In practical application, such a protective suit may have considerably more application parts sewn to the outer material than the reinforcing elements 65, for example decorative application in the region of the back, involving a corresponding number of seams.

## Claims

1. A clothing part (31) that is a laminate of an outer protective material and an inner functional layer that is water-vapor-permeable and liquid waterproof,
in which the functional layer is comprised of a plurality of functional layer pieces (11) joined together by stitched seams (21) that are waterproof by providing seam tape (23) over the seam (21) on the surface of the functional layer that is adjacent the outer protectiver material,
said outer protective material and said plurality of functional layer pieces (11) being joined together by an adhesive layer (14).

2. A clothing part as claimed in claim 1, wherein the outer protective material comprises a plurality of outer protective material pieces (25) which are joined together by seams (27).

3. A clothing part as claimed in claim 1 or 2, wherein the adhesive layer (14) is a discontinuous layer of a water-vapor-impermeable adhesive.

4. A clothing part as claimed in claim 1 or 2, wherein the adhesive layer (14) is a continuous layer of a water-vapor-permeable adhesive.

5. A clothing part as claimed in any of claims 1 - 4, wherein the inner functional layer material comprises a water-vapor-permeable and liquid waterproof polymer selected from the group consisting of polyurethane, polypropylene, polyester, polyetherester and polytetrafluoroethylene.

6. A clothing part as claimed in any of claims 1 - 5, wherein the functional layer material is comprised of a membrane.

7. A clothing part as claimed in any of claims 1 - 5, wherein the functional layer material is comprised of a film.

8. A clothing part as claimed in claim 5, wherein the functional layer material comprises porous polytetrafluoroethylene.

9. A clothing part as claimed in any of claims 1 - 8, wherein the functional layer material is a laminate comprising a waterproof, water-vapor-permeable layer (13) and a lining layer (15).

10. A plurality of clothing parts (31) as claimed in any of claims 1 - 9, which are joined together.

11. Clothing as claimed in claim 10 in the form of a jacket, trousers, coat, overall, hat, glove or footwear.

12. A process for manufacturing a clothing part (31), which comprises:
providing an outer material part (29);
providing a plurality of pieces (19) of waterproof, water-vapor-permeable functional layer material;
joining the functional layer pieces (19) together by means of stitched seams (21) to form a functional layer part (17);
waterproofing the functional layer seams (21); by covering the seams (21) with waterproof seam tape (23);
locating the functional layer part (17) on the inner surface of the outer material part (29), with the seam tape (23) facing the outer material part (29),
joining the outer material (29) and the functional layer part (17) together by means of an adhesive layer (14).

13. A process as claimed in claim 12, wherein a plurality of outer protective material pieces (25) are joined together by means of seams (23) to form an outer material part (29).

## Patentansprüche

1. Bekleidungsstück (31), bei dem es sich um ein Laminat aus einem äußeren schützenden Material und einer inneren Funktionsschicht handelt, die wasserdampfdurchlässig und flüssigwasserdicht ist,
wobei die Funktionsschicht gebildet ist aus einer Mehrzahl von Funktionsschichtstücken (11), die durch Nähnähte (21) miteinander verbunden sind, die durch Vorsehen eines Nahtbandes (23) über der Naht (21) auf der dem äußeren schützenden Material benachbarten Oberfläche der Funktionsschicht wasserdicht sind,
wobei das äußere schützende Material sowie die Mehrzahl der Funktionsschichtstücke (11) durch eine Klebstoffschicht (14) miteinander verbunden sind.

2. Bekleidungsstück nach Anspruch 1,
wobei das äußere schützende Material eine Mehrzahl von äußeren schützenden Materialstücken (25) aufweist, die durch Nähte (27) zusammengefügt sind.

3. Bekleidungsstück nach Anspruch 1 oder 2,
wobei die Klebstoffschicht (14) eine nicht kontinuierliche Schicht aus wasserdampfundurchlässigem Klebstoff ist.

4. Bekleidungsstück nach Anspruch 1 oder 2,
wobei die Klebstoffschicht (14) eine kontinuierliche Schicht aus wasserdampfdurchlässigem Klebstoff ist.

5. Bekleidungsstück nach einem der Ansprüche 1 bis 4,
wobei das innere Funktionsschichtmaterial ein wasserdampfdurchlässiges und flüssigwasserdichtes Polymer aufweist, das ausgewählt ist aus der Gruppe bestehend aus Polyurethan, Polypropylen, Polyester, Polyätherester und Polytetrafluorethylen.

6. Bekleidungsstück nach einem der Ansprüche 1 bis 5,
wobei das Funktionsschichtmaterial aus einer Membran besteht.

7. Bekleidungsstück nach einem der Ansprüche 1 bis 5,
wobei das Funktionsschichtmaterial aus einer Folie besteht.

8. Bekleidungsstück nach Anspruch 5,
wobei das Funktionsschichtmaterial poröses Polytetrafluorethylen aufweist.

9. Bekleidungsstück nach einem der Ansprüche 1 bis 8,
wobei das Funktionsschichtmaterial ein Laminat ist, das eine wasserdichte, wasserdampfdurchlässige Schicht (13) und eine Futtermaterialschicht (15) aufweist.

10. Mehrzahl von Bekleidungsstücken (31) nach einem der Ansprüche 1 bis 9, die zusammengefügt sind.

11. Bekleidung nach Anspruch 10 in Form einer Jacke, von Hosen, eines Mantels, eines Overalls, eines Hutes, von Handschuhen oder Fußbekleidung.

12. Verfahren zum Herstellen eines Bekleidungsstücks (31), das folgende Schritte aufweist:
Bereitstellen eines Außenmaterialteils (29);
Bereitstellen einer Mehrzahl von Stücken (19) aus wasserdichtem, wasserdampfdurchlässigen Funktionsschichtmaterial;
Zusammenfügen der Funktionsschichtstücke (19) mittels Nähnähten (21) zur Bildung eines Funktionsschichtteils (17);
wasserdicht Machen der Funktionsschichtnähte (21) durch Überdecken der Nähte (21) mit wasserdichtem Nahtband (23);
Anordnen des Funktionsschichtteils (17) auf der inneren Oberfläche des Außenmaterialteils (29), wobei das Nahtband (23) dem Außenmaterialteil zugewandt ist;
Zusammenfügen des Außenmaterials (29) und des Funktionsschichtteils (17) mittels einer Klebstoffschicht (14).

13. Verfahren nach Anspruch 12,
wobei die Mehrzahl der äußeren schützende Materialstücke (25) mittels Nähten (23) zusammengefügt sind, um ein äußeres Materialteil (29) zu bilden.

## Revendications

1. Partie de vêtement (31) qui est un stratifié constitué d'un matériau de protection extérieur et d'une couche fonctionnelle intérieure qui est perméable à la vapeur d'eau et imperméable à un liquide,
dans laquelle la couche fonctionnelle est constituée d'une pluralité de morceaux (11) de couche fonctionnelle reliés ensemble par des coutures (21) qui sont imperméables en fournissant un ruban de couture (23) par-dessus la couture (21) sur la surface de la couche fonctionnelle qui est adjacente au matériau de protection extérieur,
ledit matériau de protection extérieur et ladite pluralité de morceaux de couche fonctionnelle (11) étant reliés ensemble par une couche d'adhésif (14).

2. Partie de vêtement selon la revendication 1, dans laquelle le matériau de protection extérieur comporte une pluralité de morceaux de matériau de protection extérieur (25) qui sont reliés ensemble par des coutures (27).

3. Partie de vêtement selon la revendication 1 ou 2, dans laquelle la couche adhésive (14) est une couche discontinue d'adhésif imperméable à la vapeur d'eau.

4. Partie de vêtement selon la revendication 1 ou 2, dans laquelle la couche d'adhésif (14) est une couche continue d'adhésif perméable à la vapeur d'eau.

5. Partie de vêtement selon l'une quelconque des revendications 1 à 4, dans laquelle le matériau de couche fonctionnelle intérieure comporte un polymère perméable à la vapeur d'eau et imperméable à un liquide provenant du groupe constitué de polyuréthanne, polypropylène, polyester, polyétherester et polytétrafluoroéthylène.

6. Partie de vêtement selon l'une quelconque des revendications 1 à 5, dans laquelle le matériau de couche fonctionnelle est constitué d'une membrane.

7. Partie de vêtement selon l'une quelconque des revendications 1 à 5, dans laquelle le matériau de couche fonctionnelle est constitué d'un film.

8. Partie de vêtement selon la revendication 5, dans laquelle le matériau de couche fonctionnelle est constitué de polytétrafluoroéthylène poreux.

9. Partie de vêtement selon l'une quelconque des revendications 1 à 8, dans laquelle le matériau de couche fonctionnelle est un stratifié comportant une couche imperméable, perméable à la vapeur d'eau (13) et une couche de revêtement (15).

10. Pluralité de parties de vêtement (31) selon l'une quelconque des revendications 1 à 9, qui sont reliées ensemble.

11. Vêtement selon la revendication 10 ayant la forme d'une veste, de pantalons, d'un manteau, d'une blouse, d'un chapeau, de gants ou de chaussures.

12. Procédé de fabrication d'une partie de vêtement (31), qui consiste à :
fournir une partie de matériau extérieur (29),
fournir une pluralité de morceaux (19) d'un matériau de couche fonctionnelle imperméable, perméable à la vapeur d'eau,
relier ensemble les pièces de couche fonctionnelle (19) par l'intermédiaire d'une couture (21) pour former une partie de couche fonctionnelle (17),
rendre imperméables les coutures de couche fonctionnelle (21), en recouvrant les coutures (21) à l'aide d'un ruban de couture imperméable (23),
positionner la partie de couche fonctionnelle (17) sur la surface intérieure de la partie de matériau extérieur (29, le ruban de couture (23) étant dirigé vers la partie de matériau extérieur (29),
relier ensemble le matériau extérieur (29) et la partie de couche fonctionnelle (17) par l'intermédiaire d'une couche d'adhésif (14).

13. Procédé selon la revendication 12, dans lequel une pluralité de morceaux de matériau de protection extérieur (25) sont reliés ensemble par l'intermédiaire de coutures (23) pour former une partie de matériau extérieur (29).
